# EUROPÄISCHE PATENTANMELDUNG

(11) **EP 0 705 967 A1**
(43) Veröffentlichungstag der Anmeldung: **10.04.1996**
(21) Anmeldenummer: 95113898.1
(22) Anmeldetag: 05.09.1995
(51) Int. Cl.: F02D 9/10

(54) **Drosselklappenanordnung**

(30) Priorität: 05.10.1994 DE 9415977 U
(71) Anmelder: Hahn, Karlheinz, D-94315 Straubing (DE)
(72) Erfinder: Hahn, Karlheinz, D-94315 Straubing (DE)

(57) **Zusammenfassung**

Die vorliegende Erfindung betrifft eine Drosselklappenanordnung für den Luftkanal eines Vergasers bzw. einen Drosselklappenstutzen für einen Verbrennungsmotor, mit einer Drosselklappenwelle (12) und einer Drosselklappe (10), wobei die Drosselklappenwelle (12) mit der Drosselklappe (10) einstückig ausgebildet ist.

## Beschreibung

Die vorliegende Erfindung betrifft eine Drosselklappenanordnung für den Luftkanal eines Vergasers bzw. einen Drosselklappenstutzen für einen Verbrennungsmotor, mit einer Drosselklappenwelle und einer Drosselklappe.

Derartige Vergaser werden an Innenbrennkraftmaschinen angeordnet sind, insbesondere an Otto-, Diesel- , Wankel- oder ähnliche Verbrennungsmotoren, die beispielsweise ein Auto oder ein Go-Kart antreiben.

Die Drosselklappe hat die Funktion, durch einen entsprechenden Anstellwinkel, den Luftkanal des Vergasers variabel zu öffnen und zu schließen, um die Luftzufuhr in den Vergaser und damit das Verbrennungsgemisch für den Verbrennungsmotor zu regulieren. Dadurch läßt sich Drehzahl bzw. Leistungsabgabe des Motors regulieren und kontrollieren.

Die Fertigung der Drosselklappenanordnung erfolgt bekannterweise aus zwei Teilen, einer Drosselklappe und einer Drosselklappenwelle. Die Drosselklappenwelle ist üblicherweise geschlitzt und in den Schlitz wird die Drosselklappe eingeführt und festgeschraubt.

Dies hat den Nachteil einer komplizierten und aufwendigen Herstellung. Erst müssen beide Teile, Drosselklappe und Drosselklappenwelle getrennt hergestellt und danach zusammengebaut werden. Weiterhin hat es sich als nachteilig erwiesen, daß bei Vollgasbetrieb, d.h. bei voll geöffneter Drosselklappe, die Drosselklappenwelle durch ihre Dicke eine merkliche Verkleinerung der Lufteinlaßquerschnittsfläche des Luftkanals bedingt. Dies wirkt sich in einer reduzierten Motorleistung im Vollgasbetrieb aus.

Eine Möglichkeit der Verbesserung wäre, den Luftkanal entsprechend zu vergrößern, jedoch ist dies nicht immer möglich. Zum einen können diesem Vorgehen konstruktive Hindernisse entgegenstehen, beispielsweise steht u.U. kein zusätzlicher Platz für den dann größeren Vergaser zur Verfügung. Zum anderen schränken Vorschriften oder Reglements von Auto-, Motorrad-, Go-Kart-Rennen oder ähnlichem, oftmals den zulässigen Querschnitt des Luftkanals ein.

Der vorliegenden Erfindung liegt daher die Aufgabe zugrunde, eine Drosselklappenanordnung der eingangs genannten Art zur Verfügung zu stellen, die bei konstantem Querschnitt des Luftkanals einen erhöhten Luftdurchsatz im Vollgasbetrieb ermöglicht und eine einfache und schnelle Herstellung sowie Montage ermöglicht.

Diese Aufgabe wird bei einer Drosselklappenanordnung der eingangs genannten Art erfindungsgemäß dadurch gelöst, daß die Drosselklappenwelle mit der Drosselklappe einstückig ausgebildet ist.

Dies hat den Vorteil, daß in einem einzigen Arbeitsgang, die gesamte Drosselklappenanordnung hergestellt wird und ein nachträgliches zusammensetzten von Einzelteilen entfällt. Weiterhin ist der Einbau vereinfacht.

Durch die Reduzierung der Dicke der Drosselklappenwelle auf die Dicke der Drosselklappe, wird der Luftströmungsquerschnitt im Luftkanal im Vollgasbetrieb erhöht, was zu einer deutlichen Erhöhung der Motorleistung im Vollgasbetrieb führt.

Weitere Vorteile und Merkmale der Erfindung ergeben sich aus der folgenden Beschreibung einer Ausführungsform und aus den Zeichnungen, auf die Bezug genommen wird. Darin zeigt:
- Fig. 1: Eine Draufsicht auf eine erfindungsgemäße Drosselklappenanordnung, und
- Fig. 2: eine Seitenansicht einer erfindungsgemäßen Drosselklappenanordnung.

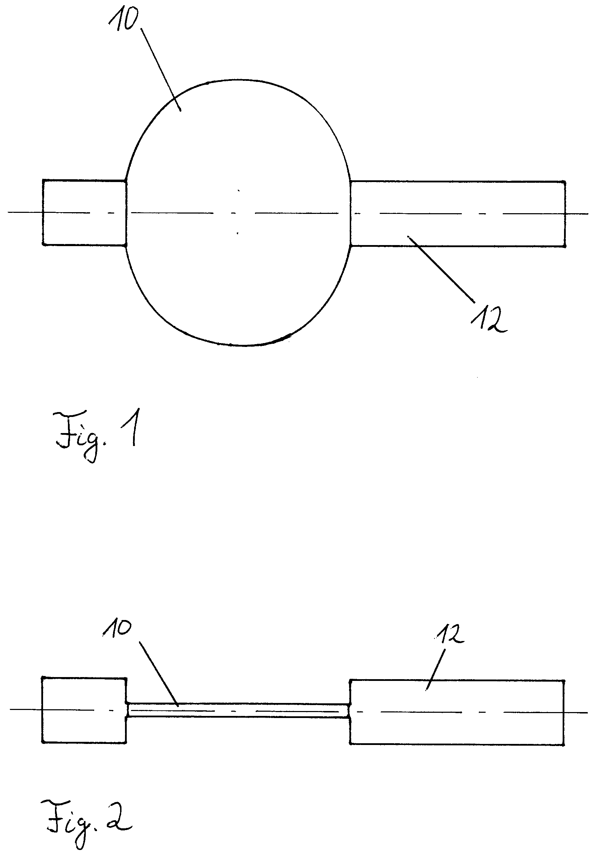

Fig. 1 zeigt eine Draufsicht auf eine erfindungsgemäße Drosselklappenanordnung.

Diese Anordnung besteht aus einer Drosselklappe 10 und einer Drosselklappenwelle 12. Beide sind zusammen aus einem Stück gefertigt. Die Drosselklappe 10 ist etwa in der Mitte der Drosselklappenwelle 12 angeordnet.

Im Einbauzustand ist die Drosselklappenwelle 12 an ihren Enden in einem Vergasergehäuse drehbar gelagert. Durch die Drehbewegung der Drosselklappenwelle 12 wird der Anstellwinkel der Drosselklappe 10 im Luftkanal verändert, so daß der Luftströmungsquerschnitt variabel verändert wird.

Fig. 2 zeigt eine Seitenansicht der Drosselklappenanordung, wie sie im Luftkanal im Vollgasbetrieb zu sehen ist. Die Drosselklappenwelle 12 hat sich gegenüber Fig. 1 um 90 Grad gedreht. Nunmehr begrenzt nur noch die Dicke der Drosselklappe 10 und der Drosselklappenwelle 12 die Luftströmung innerhalb des Luftkanals.

Im Bereich der Drosselklappe 10, ist die Dicke der Drosselklappenwelle 12 auf die Dicke der Drosselklappe 10 reduziert, wodurch sich ein erhöhter Luftströmungsquerschnitt ergibt. Dies resultiert in einer deutlich erhöhten Motorleistung im Vollgasbetrieb trotz unverändertem Querschnitt des Luftkanals.

Die Querschnittsreduzierung ist ebenfalls auf der ganzen Länge der Drosselklappenwelle 12 möglich, was mit einer entsprechenden weiteren Leistungssteigerung im Vollgasbetrieb einhergeht.

### Bezugszeichenliste

- 10: Drosselklappe
- 12: Drosselklappenwelle

## Patentansprüche

1. Drosselklappenanordnung für den Luftkanal eines Vergasers bzw. einen Drosselklappenstutzen für einen Verbrennungsmotor, mit einer Drosselklappenwelle (12) und einer Drosselklappe (10),
**dadurch gekennzeichnet, daß**
die Drosselklappenwelle (12) mit der Drosselklappe (10) einstückig ausgebildet ist.

2. Drosselklappenanordnung nach Anspruch 1,
**dadurch gekennzeichnet, daß**
die Drosselklappenwelle (12) in einem vorbestimmten Bereich dieselbe Dicke aufweist wie die Drosselklappe (10).

3. Drosselklappenanordnung nach Anspruch 1,
**dadurch gekennzeichnet, daß**
die Drosselklappenwelle (12) im Bereich der Drosselklappe (10) dieselbe Dicke aufweist wie die Drosselklappe (10).

4. Drosselklappenanordnung nach Anspruch 1,
**dadurch gekennzeichnet, daß**
die Drosselklappenwelle (12) und die Drosselklappe (10) im gesamten Bereich innerhalb des Luftkanals dieselbe Dicke aufweisen.
